# EUROPÄISCHE PATENTSCHRIFT

(11) **EP 2 762 390 B1**
(45) Veröffentlichungstag und Bekanntmachung des Hinweises auf die Patenterteilung: **07.06.2017**
(21) Anmeldenummer: 14150708.7
(22) Anmeldetag: 10.01.2014
(51) Int. Cl.: B62D 65/16, B62D 25/08

(54) **Befestigungsvorrichtung für Anbauteile von Fahrzeugen**
Fastening device for parts atttached to vehicles
Dispositif de fixation pour des accessoires de véhicules

(30) Priorität: 30.01.2013 DE 102013100915
(43) Veröffentlichungstag der Anmeldung: 06.08.2014
(73) Patentinhaber: HBPO GmbH, 59557 Lippstadt (DE)
(72) Erfinder: Brückner, Reinhold, 33442 Herzebrock-Clarholz (DE); Neuhaus, Steffanie, 33129 Delbrück (DE)
(74) Vertreter: Ostermann, Thomas

(56) Entgegenhaltungen:
- WO-A1-2012/120046
- US-A1- 2005 023 864

## Beschreibung

Die Erfindung betrifft eine Vorrichtung zum Ausrichten von Anbauteilen an einer Karosserie eines Fahrzeugs nach dem Oberbegriff des Patentanspruches 1.

Aus der DE 10 2008 020 304 A1 ist eine Befestigungsvorrichtung für Anbauteile an einer Karosserie eines Fahrzeugs bekannt, die das Befestigen und Ausrichten eines als Stoßfängerüberzug ausgebildeten Anbauteils ermöglicht. Der Stoßfängerüberzug wird an einer langgestreckten Halteeinheit befestigt und ausgerichtet, wobei die langgestreckte Halteeinheit an einem ebenfalls langgestreckten Montageträger befestigt ist. Der Montageträger und die Halteeinheit verlaufen jeweils in Fahrzeugquerrichtung. Als Befestigungs- und Ausrichtmittel sind höhenausrichtbare Gewindebuchsen verteilt entlang der Halteeinheit angeordnet, die mit Stegansetzen des Stoßfängerüberzugs zusammenwirken. Nachteilig an der bekannten Befestigungsvorrichtung ist, dass zuerst die Halteeinheit an dem Montageträger ausgerichtet und erst danach der Stoßfängerüberzug an der Halteeinheit befestigt und ausgerichtet werden kann. Der Montageaufwand durch zwei Ausrichtvorgänge ist relativ groß. Darüber hinaus kann mittels der Halteeinheit lediglich ein einziges Anbauteil, nämlich der Stoßfängerüberzug, an dem Montageträger ausgerichtet befestigt werden.

Die US 2005/0023864 A1 offenbart ein Vorrichtung zum Ausrichten von Anbauteilen an einer Karosserie eines Fahrzeuges, bei der ein Haltekörper in x-Richtung verschiebbar gelagert ist, um einen Stoßfänger und einen Scheinwerfer relativ zu einem Montageträger zu justieren. Hierzu ist eine Verzahnung mit einer Zahnstange und eine Einstellvorrichtung mit einem Ritzel vorgesehen. Es erfolgt hier eine 2-stufige Ausrichtung, wobei mittels einer in eine Nut eingreifenden Schraube die Ausrichtung abgeschlossen ist.

Aus der WO 2012/120046 A1 ist eine Vorrichtung zum Ausrichten von Anbauteilen an einer Karosserie eines Fahrzeuges bekannt. Ein Haltekörper, an dem Anbauteile wie bspw. Scheinwerfer befestigt sind, kann mittels eine linearen Stellelementes relativ zu einem weiteren Anbauteil, wie bspw. einem Stoßfängerüberzug ausgerichtet werden. Hierdurch ist es möglich, gleichzeitig mehrere Anbauteile relativ zu dem weiteren Anbauteil unter Einstellung eines vorgegebenen Fugenverlaufs an der Karosserie zu befestigen.

Aufgabe der vorliegenden Erfindung ist es daher, eine Vorrichtung zum Ausrichten von Anbauteilen an einer Karosserie eines Fahrzeugs derart weiterzubilden, dass eine einfache und kostengünstige Montage gewährleistet ist, wobei insbesondere eine handhabungstechnisch einfache Ausrichtung des Anbauteils bezüglich der Karosserie erfolgen kann.

Zur Lösung der Aufgabe weist die Erfindung die Merkmale des Patentanspruchs 1 auf.

Nach der Erfindung ist eine örtliche Trennung zwischen dem an einer Halteeinheit für mindestens ein Anbauteil vorgesehenen Befestigungsmittel einerseits und dem Ausrichtmittel andererseits vorgesehen. Während die Befestigungsmittel der Halteeinheit zum Festlegen oder Abstützen von mindestens einem Anbauteil, beispielsweise einem Stoßfängerüberzug und einem Scheinwerfergehäuse, dienen, kann durch Betätigen des Ausrichtmittels eine Ausrichtung bzw. Fugeneinstellung zu einem weiteren Anbauteil, beispielsweise einer Motorhaube, erfolgen. Das Ausrichtmittel umfasst ein axialfest mit dem Montageträger verbundenes lineares Stellelement, so dass lediglich eine einmalige Ausrichtung des mindestens einen Anbauteils notwendig ist. Eine Ausrichtung der Halteeinheit ist nicht notwendig. Der Montage- und Ausrichtaufwand kann somit wesentlich reduziert werden.

Nach der Erfindung ist das lineare Stellelement als ein Gewindebolzen ausgebildet, wobei ein Kopf des Gewindebolzens mittels eines fest mit dem Montageträger verbundenen Festlegelementes axialfest fixiert ist. Ein Schaft des Gewindebolzens steht in einer Gewindebohrung der Halteeinheit in Eingriff, so dass die Halteeinheit eine Justierrichtung vorgebenden Gewindebolzens verschiebbar zu dem Montageträger gelagert ist. Mit Betätigen des Gewindebolzens kann somit eine einfache Ausrichtung von an der Halteeinheit angesetzten Anbauteilen erfolgen.

Nach einer Weiterbildung der Erfindung ist das Festlegeelement durch Verrasten in einer Lagerausnehmung des Montageträgers mit demselben verbunden. Das Festlegeelement kann somit durch Einklipsen einfach in eine definierte Einbaulage gebracht werden und ermöglicht somit eine definierte Anordnung der Halteeinheit an dem Montageträger.

Nach einer Weiterbildung der Erfindung weist der Montageträger eine Aussparung auf, die beispielsweise die Form eines Schlüssellochs hat. Die Aussparung ermöglicht die Bereitstellung von Führungsmitteln, die beispielsweise einen Rand der Aussparung, so dass mindestens ein Anbauteil aufnehmender Haltekörper der Halteeinheit in Justierrichtung verschiebbar geführt ist. Das Anbauteil ist zumindest in Justierrichtung an dem Haltekörper festgelegt, so dass mittels Betätigen des Gewindebolzens eine genaue Ausrichtung bzw. Fugeneinstellung ermöglicht wird. Wenn die Justierrichtung in einer Fahrzeughochrichtung verläuft, ist der Haltekörper durch die Führungsmittel in Fahrzeugquerrichtung und in Fahrzeuglängsrichtung lagesicher gehalten.

Nach einer Weiterbildung der Erfindung sind mehrere Aussparungen des Montageträgers in Fahrzeughochrichtung verlaufend angeordnet, wobei in einem oberen Bereich die Lagerausnehmung für die Aufnahme des Festlegelementes angeordnet ist. Die Aussparungen ermöglichen ein einfaches Ansetzen des Haltekörpers an dem Montageträger einerseits und eine geführte Verschiebbarkeit des Haltekörpers in Fahrzeughochrichtung andererseits.

Nach einer Weiterbildung der Erfindung ist ein Kopf des Gewindebolzens in einem Raum zwischen einem Bohrungsabschnitt des Festlegelementes und einer Zwischenwandung des Montageträgers angeordnet, so dass durch Ansetzen eines Werkzeugs an dem Kopf der Gewindebolzen verdrehbar und aufgrund der drehfesten Lagerung des Haltekörpers an den Führungsflächen derselben in Justierrichtung verschiebbar ist.

Nach einer Weiterbildung der Erfindung weist der Haltekörper ein Verstärkungsteil auf, das in eine Ausnehmung des Anbauteils eingreift zur Verstärkung desselben. Handelt es sich bei dem Anbauteil um einen Stoßfängerüberzug mit integrierter Nebelleuchte, Sensoren oder anderen Bauteilen, was zu einem erhöhten Gewicht führt, kann somit eine stabilisierte Einbaulage des Stoßfängerüberzugs erreicht werden.

Nach einer Weiterbildung der Erfindung ist der Haltekörper so ausgebildet, dass er zur Befestigung und/oder Abstützung von mindestens zwei Anbauteilen, beispielsweise einem Stoßfängerüberzug und einem Scheinwerfergehäuse dient. Auf diese Weise kann durch Betätigen des linearen Stellelementes gleichzeitig die Ausrichtung von mehreren Anbauteilen verwirklicht werden.

Nach einer Weiterbildung der Erfindung ist an gegenüberliegenden Endbereichen des Montageträgers jeweils eine Halteeinheit in entsprechenden Aussparungen des Montageträgers angeordnet. Vorzugsweise sind die Halteeinheiten spiegelverkehrt zu der Fahrzeuglängsrichtung angeordnet. Dadurch, dass die Halteeinheiten lediglich partiell in Fahrzeugquerrichtung an dem Montageträger angeordnet sind, wird eine kompakte und gewichtssparende Halterung und Ausrichtung von mehreren Anbauteilen gewährleistet.

Ein Ausführungsbeispiel der Erfindung wird nachfolgend anhand der Zeichnungen näher erläutert.

Es zeigen:

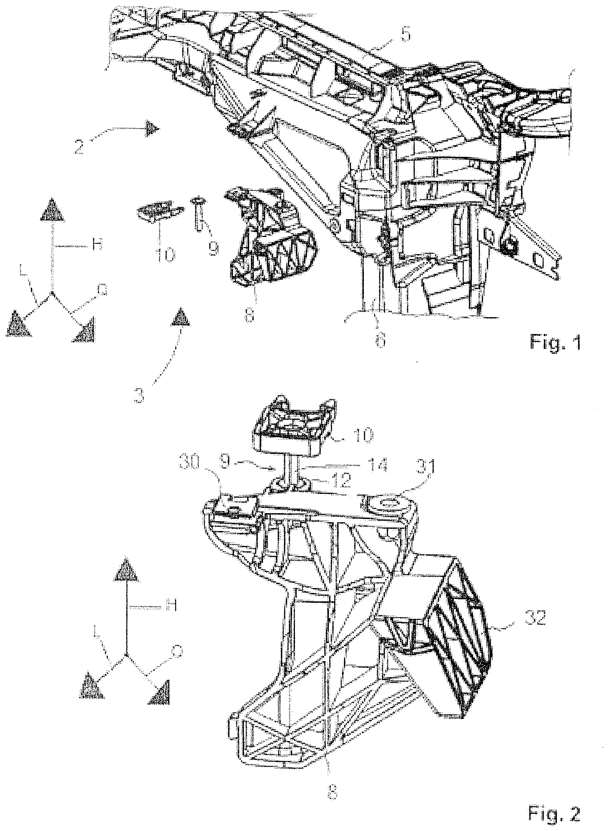

- Figur 1: eine Explosionsdarstellung einer Halteeinheit zum Ausrichten von Anbauteilen vor einem Montageträger,
- Figur 2: eine Vorderansicht der aus mehreren Teilen zusammengesetzten Halteeinheit,

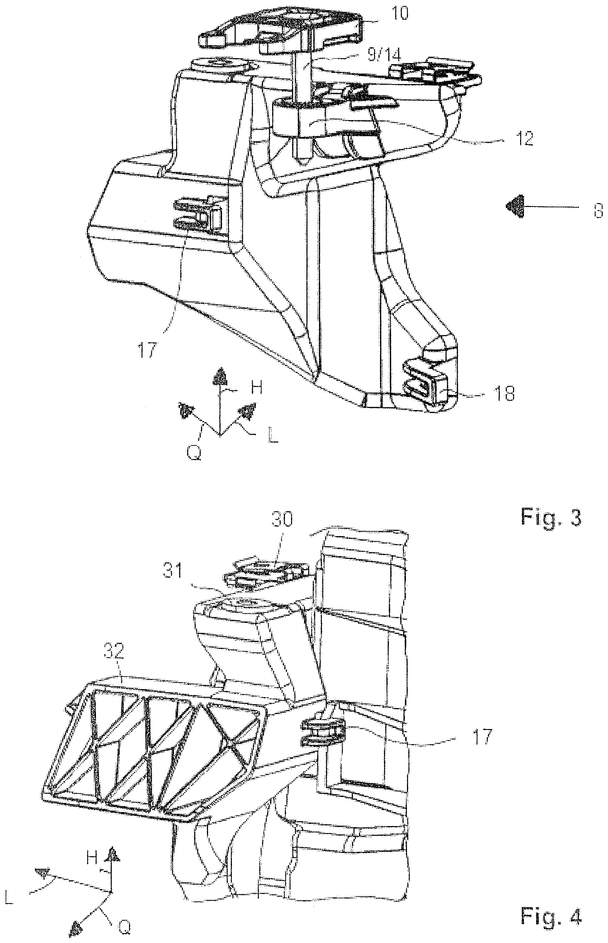

- Figur 3: eine Rückansicht der aus mehreren Teilen zusammengesetzten Halteeinheit,
- Figur 4: eine Seitenansicht der Halteeinheit im montierten Zustand am Montageträger mit Führungsmitteln am Montageträger,

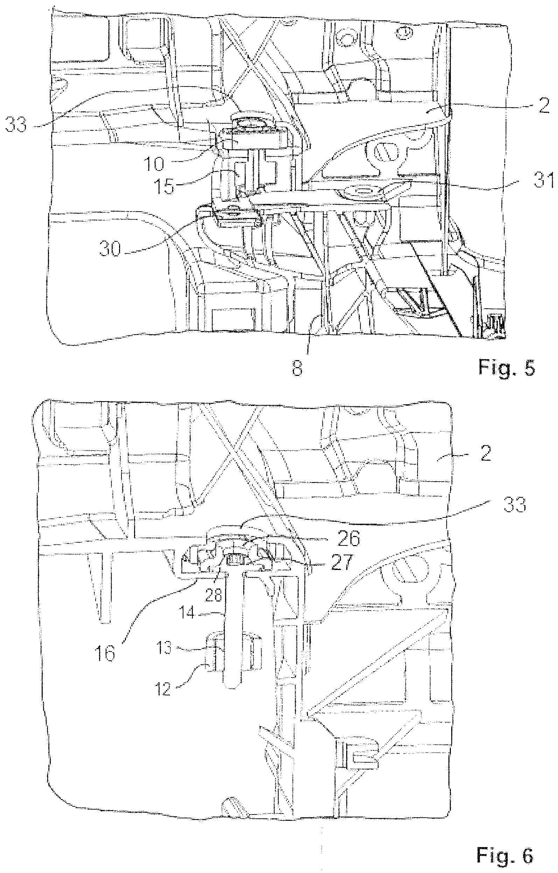

- Figur 5: eine Vorderansicht der am Montageträger montierten Halteeinheit,
- Figur 6: eine im Vergleich zu Figur 5 an einer Längsmittelebene eines Gewindebolzens der Halteeinheit geschnittenen Darstellung der montierten Halteeinheit an dem Montageträger,

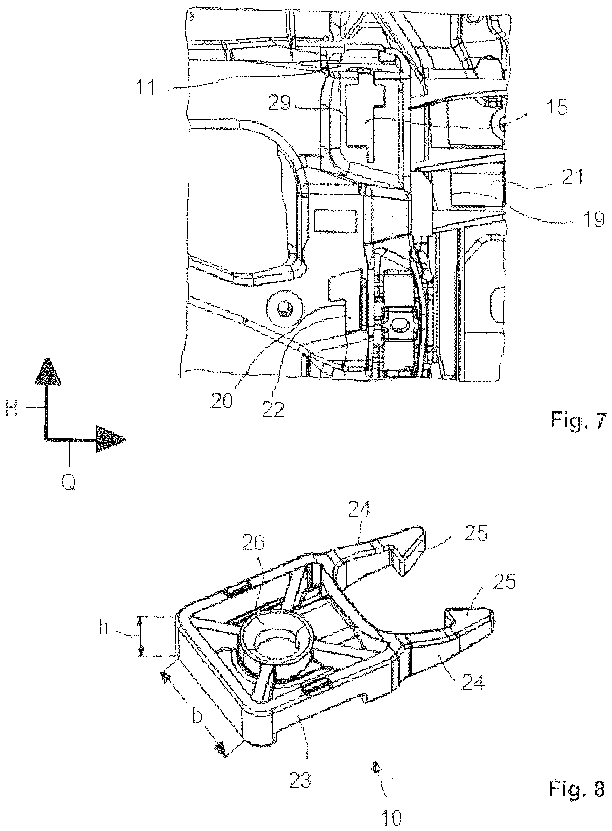

- Figur 7: eine Vorderansicht des Montageträgers mit Aussparungen zur Aufnahme der Halteeinheit,
- Figur 8: eine perspektivische Darstellung eines in eine Lagerausnehmung des Montageträgers rastend eingreifbaren Festlegelementes,

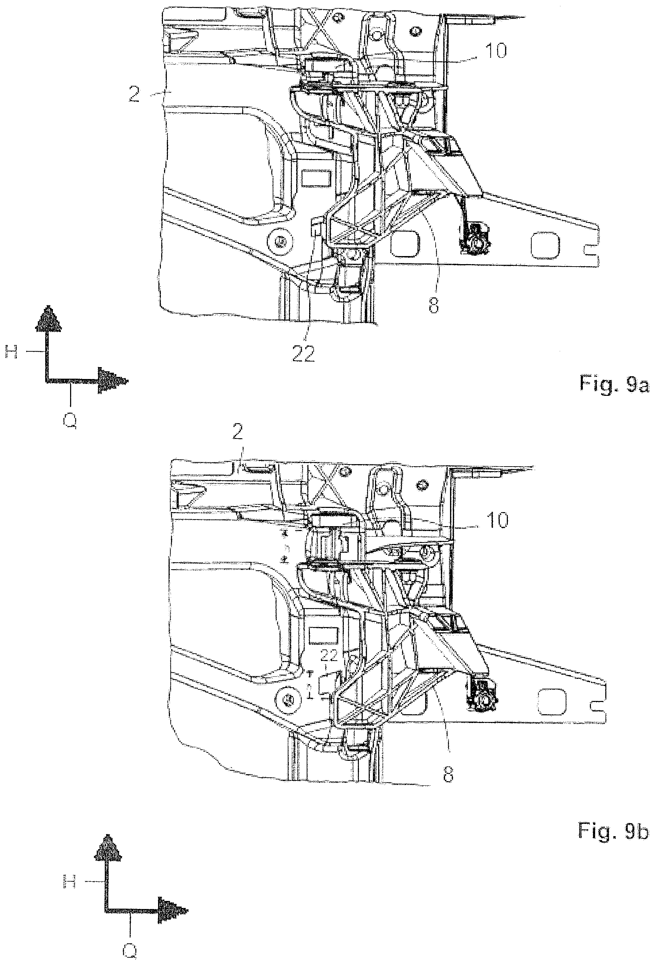

- Figur 9a: eine Vorderansicht der in dem Montageträger eingesetzten Halteeinheit in einer oberen Stellung eines die Anbauteile aufnehmenden Haltekörpers der Halteeinheit,
- Figur 9b: eine Vorderansicht der in dem Montageträger eingesetzten Halteeinheit in einer unteren Stellung des Haltekörpers,

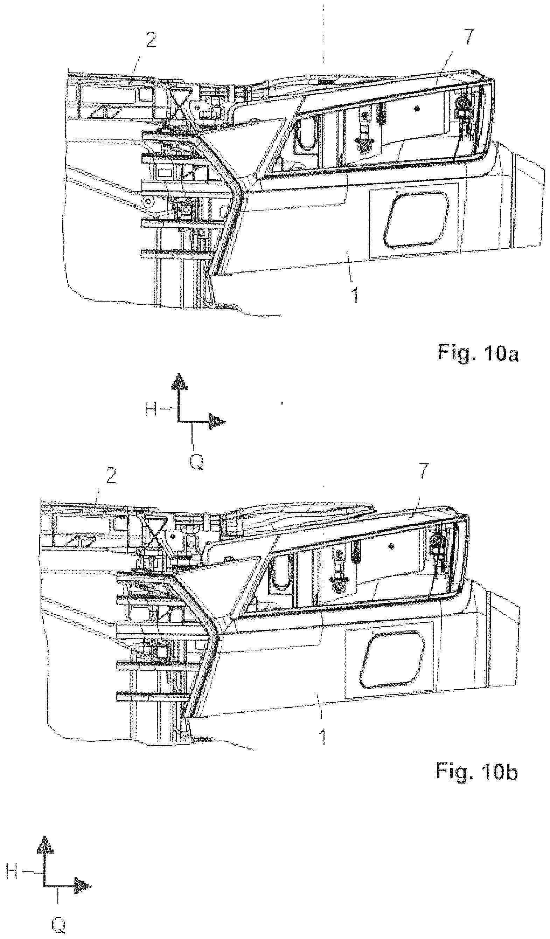

- Figur 10a: eine Vorderansicht der in dem Montageträger eingesetzten Halteeinheit in einer oberen Stellung mit einem an dem Haltekörper befestigten Stoßfängerüberzug sowie Scheinwerfergehäuseaufnahme als Anbauteile und
- Figur 10b: eine Vorderansicht der in dem Montageträger eingesetzten Halteeinheit in einer unteren Stellung des Haltekörpers mit den an dem Haltekörper befestigten Stoßfängerüberzug und der Scheinwerfergehäuseaufnahme.

Eine Vorrichtung zum Ausrichten von Anbauteilen an einer Karosserie eines Fahrzeugs kann im Frontbereich oder im Heckbereich vorgesehen sein. Das im Folgenden beschriebene Ausführungsbeispiel bezieht sich auf die Ausrichtung und Befestigung von zwei Anbauteilen, nämlich einem Stoßfängerüberzug 1 und einer Scheinwerferaufnahme 7 an einem in Fahrzeugquerrichtung Q verlaufenden langgestreckten Montageträger 2, der an Längsträgern der Fahrzeugkarosserie befestigt ist. Die Ausrichtung des Stoßfängerüberzugs 1 und der Scheinwerfergehäuseaufnahme 7 erfolgt mittels einer Halteeinheit 3, die jeweils in gegenüberliegenden Endbereichen des Montageträgers 2 an demselben angesetzt sind. In den Figuren ist exemplarisch lediglich die in einer Fahrzeuglängsrichtung L links angeordnete Halteeinheit 3 dargestellt. Auf der rechten Seite des Montageträgers 2 ist eine entsprechend spiegelverkehrt ausgebildete Halteeinheit vorgesehen.

Der Montageträger 2 ist Teil eines Frontendmoduls und dient zur Aufnahme mehrerer Anbauteile, also neben dem Stoßfängerüberzug 1 und den Scheinwerfergehäuseaufnahmen 7 zur Aufnahme eines nicht dargestellten Kühlmoduls.

Der Montageträger 2 weist einen in Fahrzeugquerrichtung Q verlaufenden Hauptträgerabschnitt 5 sowie in gegenüberliegenden Endbereichen des Hauptträgerabschnitts 5 senkrecht anschließende Nebenträgerabschnitte 6. Die Nebenträgerabschnitte 6 verlaufen vorzugsweise in Fahrzeughochrichtung H.

Sowohl der Stoßfängerüberzug 1 als auch die Scheinwerfergehäuseaufnahme 7 werden über die gemeinsame Halteeinheit 3 in einer Justierrichtung, im vorliegenden Fall der Fahrzeughochrichtung H, bezüglich eines weiteren Anbauteils, nämlich einer nicht dargestellten Motorhaube ausgerichtet. Die Halteeinheit 3 besteht aus einem Haltekörper 8, einem linearverschieblich zu demselben angeordneten linearen Stellelement 9 sowie einem fest mit dem Montageträger 2 verbindbaren Festlegelement 10.

Zur Befestigung der Halteeinheit 3 an dem Montageträger 2 ist das Festlegelement 10 rastend in einer Lagerausnehmung 11 des Montageträgers 2 eingesteckt angeordnet. Der Haltekörper 8 greift mit seinen Ausbuchtungen in mehrere Aussparungen 15, 21, 22 des Montageträgers 2 ein. Eine erste Ausbuchtung 12 des Haltekörpers 8 weist eine Gewindebohrung 13 auf, mit der ein Schaft 14 des als Gewindebolzen ausgebildeten Stellelementes 9 in Gewindeeingriff steht. In der Montageposition befindet sich die erste Ausbuchtung 12 in einer schlüssellochförmigen Aussparung 15, die durch eine Zwischenwandung 16 von der Lagerausnehmung 11 getrennt ist. Der Gewindebolzen 9 erstreckt sich somit in vertikaler Richtung (Fahrzeughochrichtung H). Die Aussparungen 21, 22 befinden sich bezüglich einer Längsachse des Gewindebolzens 9 auf gegenüberliegenden Seiten und in einem zu der schlüssellochförmigen Aussparung 15 unteren Bereich.

Die Aussparungen 15, 21, 22 des Montageträgers 2 dienen als Führungsmittel für das definierte Verschieben des Haltekörpers 6 in Justierrichtung H. An einer Rückseite des Haltekörpers 8 sind ein erster Führungshaken 17 und ein zweiter Führungshaken 18 angeordnet, die in der Montageposition jeweils einen Rand 19 bzw. 20 der Aussparung 21 bzw. 22 hintergreifen. Diese Führungsmittel bewirken, dass der Haltekörper 8 in Justierrichtung, im vorliegenden Fall in Fahrzeughochrichtung H, drehfest und verschiebbar geführt ist.

Das einsteckbare Festlegelement 10 weist einen Basiskörper 23 und sich an einer Schmalseite desselben paarweise abragende Rastarme 24 auf. Die Rastarme 24 sind quer zu einer Symmetrieachse des Basiskörpers 23 nachgiebig ausgebildet und greifen mit ihren widerhakenförmigen Enden 25 in jeweils nicht dargestellte hintere Öffnungen der Lagerausnehmung 11. Die widerhakenförmigen Enden 25 hintergreifen die Rückwand der Lagerausnehmung 11, so dass das Festlegelement 10 rastend bzw. klemmend an dem Montageträger 3 gehalten ist. Eine Höhe h und eine Breite b des Basiskörpers 23 ist an eine Höhe h und an eine Breite b der Lagerausnehmung 11 angepasst ausgebildet, so dass das Festlegelement 10 in der montierten Position lagesicher und fest mit dem Montageträger 2 verbunden ist.

Der Basiskörper 23 weist ein zentrales Gegenlagerteil 26 auf, das an die Form eines Kopfes 27 des Gewindebolzens 9 angepasst ist und im Zusammenwirken mit der Zwischenwandung 16 eine lagesichere Halterung des Gewindebolzens 9 bewirkt. Der Kopf 27 des Gewindebolzens 9 ist zwischen dem Gegenlagerteil 26 und der Zwischenwandung 16 mit einem solchen Spiel eingefasst, dass der Gewindebolzen 9 drehbar, aber axialfest angeordnet ist. Der Kopf 27 weist einen Tellerrand 28 auf, der unmittelbar an der Zwischenwandung 16 anliegt. Auf einer der Zwischenwandung 16 abgewandten Seite des Tellerrandes 28 liegt das Gegenlagerteil 26 des Basiskörpers 23 unmittelbar an.

Als Führungsmittel zur Verstellung des Haltekörpers 8 in Fahrzeughochrichtung H dienen zum einen Ränder 29 der ersten Aussparung 15 sowie die Ränder 19, 20 der zweiten Aussparung 21 bzw. der dritten Aussparung 22. Da die Ränder 19, 20 mittels der Führungshaken 17, 18 hintergriffen werden, dienen rückseitig am Rand 19, 20 anschließende Flächen des Montageträgers 2 als Führungsflächen.

In einem oberen Bereich des Haltekörpers 8 ist ein erster Befestigungspunkt 30 zum Befestigen des Stoßfängerüberzugs 1 und ein zweiter Befestigungspunkt 31 zum Befestigen der Scheinwerfergehäuseaufnahme 7 vorgesehen. Der erste Befestigungspunkt 30 ist als eine Befestigungsklammer ausgebildet, in der ein nicht dargestellter Steg des Stoßfängerüberzugs 1 eingreift und klemmend gehalten ist. Die Befestigungsklammer dient nicht notwendigerweise zur Befestigung des Stoßfängerüberzugs 1 an dem Haltekörper 8. Sie kann auch lediglich zur Abstützung des Stoßfängerüberzugs 1 in Fahrzeughochrichtung H dienen. Der zweite Befestigungspunkt 31 ist als eine Gewindebuchse ausgebildet, an der eine nicht dargestellte Befestigungslasche der Scheinwerfergehäuseaufnahme 7 durch Verschraubung fest verbindbar ist.

Der Haltekörper 8 weist ferner ein Verstärkungsteil 32 auf, das in einer nicht dargestellten Ausnehmung des Stoßfängerüberzugs 1 formschlüssig eingreift zur Verstärkung desselben. Auf diese Weise kann die Stabilität des vorzugsweise mit Sensoren, Nebelschlussleuchten und dergleichen versehenen Stoßfängerüberzugs 1 erhöht werden.

Der erste Befestigungspunkt 30 und der zweite Befestigungspunkt 31 dienen somit als Befestigungsmittel für zwei unterschiedliche Anbauteile 1, 7.

Der Gewindebolzen 9 dient als Ausrichtmittel für den bereits an dem Haltekörper 8 befestigten Stoßfängerüberzug 1 und der Scheinwerfergehäuseaufnahmen 7 bezüglich eines weiteren Anbauteils der Fahrzeugkarosserie, nämlich der nicht dargestellten Motorhaube. Bevor die Ausrichtung des Stoßfängerüberzugs 1 und der Scheinwerfergehäuseaufnahmen 7 relativ zu der Motorhaube 8 erfolgen kann, können die Scheinwerfergehäuseaufnahmen 7 bereits an dem Montageträger 2 vorpositioniert sein, wobei vorzugsweise in Fahrzeughochrichtung H sich erstreckende Langlochführungen ein Verschieben der Scheinwerfergehäuseaufnahme 7 in Fahrzeughochrichtung H relativ zum Montageträger 2 ermöglichen.

Die Halteeinheit 3 kann vor oder nach Befestigen des Montageträgers 2 an der Fahrzeugkarosserie an dem Montageträger 2 angebracht werden.

Zur Montage der Halteeinheit 3 an dem Montageträger 2 wird in einem ersten Schritt der Haltekörper 8 zusammen mit dem in Gewindeeingriff stehenden Gewindebolzen 9 in Normalrichtung zu den Aussparungen 15, 21, 22 dem Montageträger 2 zugeführt. Die Aussparungen 21, 22 weisen im oberen Bereich Erweiterungen auf, so dass die seitlich abragenden Führungshaken 17, 18 durch die Aussparungen 21, 22 hindurchsteckbar sind und nach Verschieben des Haltekörpers 8 in Fahrzeughochrichtung H nach unten die Ränder 19 bzw. 20 hintergreifen. Die Lagerausnehmung 11 weist obenseitig eine zu dem Gewindekopf 27 korrespondierende Ausformung 33 auf, damit beim Einsetzen des Haltekörpers 8 der Gewindebolzen 9 in eine zentrale Lage der Lagerausnehmung 11 bringbar ist. Der Haltekörper 8 wird so weit nach unten verschoben, bis der Tellerrand 28 des Gewindebolzenkopfes 27 an der Zwischenwandung 16 zur Anlage kommt. Nun wird in einem zweiten Schritt das Festlegelement 10 in die Lagerausnehmung 11 eingesetzt, bis die Enden 25 der Rastarme 24 an der Rückseite der Lagerausnehmung 11 einrasten. Das Festlegelement 10 weist an einer Unterseite eine an die Höhe des Gewindebolzenkopfes 27 angepasste Aussparung auf, damit es beim Einstecken den Gewindebolzenkopf 27 überstreichen kann. Die Halteeinheit 3 befindet sich nun in einer Montageposition, die zu eine Nulllage für die anzubringenden Anbauteile 1, 7 korrespondiert. Der Basiskörper 23 des Festlegelementes 10 befindet sich nun koaxial zu der Gewindebohrung 13 und dem Gewindebolzen 9.

Anschließend wird nacheinander oder gleichzeitig der Stoßfängerüberzug 1 an dem ersten Befestigungspunkt 30 und die Scheinwerfergehäuseaufnahme 7 an dem zweiten Befestigungspunkt 31 angesetzt bzw. montiert. In einem weiteren Verfahrensschritt kann nun durch Betätigen des Gewindebolzens 9 mittels eines Werkzeugs der Haltekörper 8 zusammen mit dem angesetzten Stoßfängerüberzug 1 und der Schweinwerfergehäuseaufnahme 7 in Fahrzeughochrichtung H so weit verschoben werden, bis ein gewünschter Fugenabstand des Stoßfängerüberzugs 1 bzw. der Scheinwerfergehäuseaufnahmen 7 zu der Motorhaube vorliegt. Anschließend werden der Stoßfängerüberzug 1 sowie die Scheinwerfergehäuseaufnahmen 7 über nicht dargestellte Befestigungsmittel an dem Montageträger 2 fixiert.

Nach einer alternativen Ausführungsform können die Scheinwerfergehäuseaufnahmen 7 auch nach Befestigung des Montageträgers 2 an der Fahrzeugkarosserie an dem Montageträger 2 vorpositioniert werden.

Der Montageträger 2 sowie der Haltekörper 8 und das Einsteckelement 10 bestehen vorzugsweise aus einem Kunststoff- oder Kunststoffverbundmaterial.

## Patentansprüche

1. Vorrichtung zum Ausrichten von Anbauteilen an einer Karosserie eines Fahrzeugs mit einem in Fahrzeugquerrichtung (Q) verlaufenden Montageträger (25), mit einer an dem Montageträger (2) befestigten Halteeinheit (3), an der mindestens ein Anbauteil über Befestigungsmittel ansetzbar und über Ausrichtmittel relativ zu einem weiteren Anbauteil in einer Justierrichtung ausrichtbar ist, dass als Ausrichtmittel ein axialfest mit dem Montageträger (2) verbundenes lineares Stellelement (9) vorgesehen ist, das in Justierrichtung (H) verstellbar zu einem in Eingriff mit dem linearen Stellelement (9) stehenden Haltekörper (8) der Halteeinheit (3) ist, und dass das Befestigungsmittel (30, 31) ortsfern zu dem linearen Stellmittel (9) angeordnet ist, **dadurch gekennzeichnet, dass** das lineare Stellelement (9) als ein Gewindebolzen ausgebildet ist, der in einer Montageposition unter Anlage eines Kopfes (27) des Gewindebolzens (9) an einem Festlegelement (10) axialfest an dem Montageträger (2) gehalten ist und der mit einem Schaft (14) über eine Gewindebohrung (13) des Haltekörpers (8) mit demselben in Gewindeeingriff steht.

2. Vorrichtung nach Anspruch 1, **dadurch gekennzeichnet, dass** das Festlegelement (10) rastend in einer Lagerausnehmung (11) des Montageträgers (2) angeordnet ist.

3. Vorrichtung nach Anspruch 1 oder 2, **dadurch gekennzeichnet, dass** der Montageträger (2) Führungsmittel (15, 21, 22) aufweist, so dass der Haltekörper (8) in Justierrichtung (H) verschiebbar geführt ist.

4. Vorrichtung nach Anspruch 3, **dadurch gekennzeichnet, dass** der Montageträger (2) als Führungsmittel mindestens zwei Aussparungen (21, 22) aufweist, an dessen Rand (19, 20) eine Fläche des Haltekörpers (8) in Justierrichtung (H) verschiebbar anliegt und/oder an dem Haltekörper (8) angeformte Führungshaken (17, 18) den Rand (19, 20) hintergreifen.

5. Vorrichtung nach einem der Ansprüche 1 bis 4, **dadurch gekennzeichnet, dass** der Kopf (27) des Gewindebolzens (9) zwischen dem in die Lagerausnehmung (11) eingesteckten Festlegelements (10) einerseits und einer quer zur Justierichtung (H) verlaufenden Wandung (16) des Montageträgers (2) andererseits so eingefasst ist, dass der Gewindebolzen (9) durch Ansetzen eines Werkzeugs an den Kopf (27) desselben verdrehbar ist.

6. Vorrichtung nach einem der Ansprüche 1 bis 5, **dadurch gekennzeichnet, dass** die Führungsmittel (19, 20) des Montageträgers (2) derart ausgebildet sind, dass der Haltekörper (8) bezüglich der Fahrzeughochrichtung (H) verdrehfest gelagert ist.

7. Vorrichtung nach einem der Ansprüche 1 bis 6, **dadurch gekennzeichnet, dass** an dem Haltekörper (8) ein erster Befestigungspunkt (30) zur Festlegung eines ersten Anbauteils (1) und ein zweiter Befestigungspunkt (31) zur Festlegung eines zweiten Anbauteils (7) vorgesehen ist.

8. Vorrichtung nach einem der Ansprüche 1 bis 7, **dadurch gekennzeichnet, dass** an dem Haltekörper (8) ein Verstärkungsteil (32) angeformt ist, das in einer Ausnehmung des ersten Anbauteils (1) eingreift zur Verstärkung desselben.

9. Vorrichtung nach einem der Ansprüche 1 bis 8, **dadurch gekennzeichnet, dass** an gegenüberliegenden Endbereichen des Montageträgers (2) jeweils eine Halteeinheit (3) an demselben montierbar ist.

10. Vorrichtung nach einem der Ansprüche 1 bis 9, **dadurch gekennzeichnet, dass** das erste Anbauteil (1) als ein Stoßfängerüberzug und das zweite Anbauteil (7) als eine Scheinwerfergehäuseaufnahme ausgebildet sind.

## Claims

1. A device for aligning attachment parts on a body of a vehicle with a mounting support (25) running in the vehicle transverse direction (Q), with a retaining unit (3) affixed on the mounting support (2), on which at least one attachment part can be placed via affixing means, and via alignment means can be aligned relative to a further attachment part in an adjustment direction, such that a linear adjusting element (9) which has an axially fixed connection to the mounting support (2) is provided, which is adjustable in relation to a retaining body (8) of the retaining unit (3) which is engaged with the linear adjusting element (9), and that the affixing means (30, 31) is arranged at a distance from the linear adjusting means (9), **characterized in that** the linear adjusting element (9) is designed as a threaded bolt, which is held in an axially fixed manner on an affixing element (10) in a mounting position with abutment of a head (27) of the threaded bolt (9), and with a shank (14) is in a threaded engagement with the retaining body (8) via a threaded bore hole (13) of said body.

2. The device according to Claim 1, **characterized in that** the affixing element (10) is arranged resting in a bearing recess (11) of the mounting support (2).

3. The device according to Claim 1 or 2, **characterized in that** the mounting support (2) comprises guide means (15, 21, 22) so that the retaining body (8) is guided in the adjustment direction (H) in such a manner that it can be displaced.

4. The device according to Claim 3, **characterized in that** the mounting support (2) as a guide means comprises at least two recesses (21, 22) on the edge of which (19, 20) a surface of the retaining body (8) lies in the adjustment direction (H) in such a manner that it can be displaced and/or guide hooks (17, 18) formed on the retaining body (8) engage behind the edge (19, 20).

5. The device according to one of Claims 1 to 4, **characterized in that** the head (27) of the threaded bolt (9) between the affixing element (10) inserted into the bearing recess (11) on the one side and a wall (16) of the mounting support (2) which runs transverse to the adjustment direction (H) on the other is framed in such a manner that the threaded bolt (9) can be twisted through application of a tool to the head (27) of said bolt.

6. The device according to one of Claims 1 to 5, **characterized in that** the guide means (19, 20) of the mounting support (2) are designed such that the retaining body (8) is supported in such a manner that it cannot be twisted in relation to the vertical vehicle direction (H).

7. The device according to one of Claims 1 to 6, **characterized in that** on the retaining body (8), a first affixing point (30) is provided for affixing a first attachment part (1) and a second affixing point (31) is provided for affixing a second attachment part (7).

8. The device according to one of Claims 1 to 7, **characterized in that** on the retaining body (8), a reinforcement part (32) is formed which engages in a recess of the first attachment part (1) for the purpose of reinforcing said part.

9. The device according to one of Claims 1 to 8, **characterized in that** on opposite end areas of the mounting support (2), one retaining unit (3) respectively can be mounted on said support.

10. The device according to one of Claims 1 to 7, **characterized in that** the first attachment part (1) is designed as a bumper cover, and the second attachment part (7) is designed as a headlight housing holder.

## Revendications

1. Dispositif pour l'alignement d'accessoires sur une carrosserie d'un véhicule automobile, avec un support de montage (25), qui s'étend dans la direction transversale (Q) du véhicule, avec une unité de support (3), fixée sur le support de montage (2), sur laquelle au moins un accessoire peut être installé à l'aide de moyens de fixation et peut être aligné dans une direction d'ajustage, par rapport à un autre accessoire, à l'aide de moyens d'alignement, sachant que, comme moyens d'alignement, sont prévus un élément de réglage linéaire (9), relié, axialement fixe, au support de montage (2), lequel peut être déplacé dans la direction d'ajustage (H) par rapport à un corps de support (8) de l'unité de support (3), qui est en prise avec l'élément de réglage linéaire (9), et que le moyen de fixation (30, 31) est agencé fixement par rapport au moyen de réglage linéaire (9), **caractérisé en ce que** l'élément de réglage linéaire (9) est réalisé sous la forme d'un boulon fileté, qui, dans une position de montage, par l'application de la tête (27) du boulon fileté (9) contre un élément de fixation (10) est maintenu, axialement fixe, sur le support de montage (2), et qui, avec une tige (14) est en prise avec celui-ci par l'intermédiaire d'un alésage fileté (13) du corps de support (8).

2. Dispositif selon la revendication 1,
**caractérisé en ce que** l'élément de fixation (10) est disposé dans un évidement de montage (11) du support de montage (2), dans lequel il se bloque.

3. Dispositif selon revendication 1 ou 2,
**caractérisé en ce que** le support de montage (2) présente des moyens de guidage (15, 21, 22) de manière à ce que le corps de support (8) soit guidé en déplacement dans la direction d'ajustage (H).

4. Dispositif selon la revendication 3,
**caractérisé en ce que** le support de montage (2) présente, en tant que moyens de guidage, au moins deux évidements (21, 22), contre les bords (19, 20) desquels vient porter une surface du corps de support (8), qui peut être déplacée dans la direction d'ajutage (H), et / ou des crochets de guidage (17, 18), qui, formés sur le corps de support (8), viennent s'engager derrière le bord (19, 20).

5. Dispositif selon l'une des revendications 1 à 4,
**caractérisé en ce que** la tête (27) du boulon fileté (9) est insérée entre l'élément de fixation (10), engagé dans l'évidement de montage (11), d'une part, et, d'autre part, une paroi (16) du support de montage (2), s'étendant transversalement par rapport à la direction d'ajustage (H), de manière à ce que le boulon fileté (9), par application d'un outil sur la tête (27) de celui-ci, puisse être tourné.

6. Dispositif selon l'une des revendications 1 à 5,
**caractérisé en ce que** les moyens de guidage (19, 20) du support de montage (2) sont formés de manière à ce que le corps de support (8) soit solidaire en rotation en ce qui concerne le sens de la hauteur du véhicule automobile (H).

7. Dispositif selon l'une des revendications 1 à 6,
**caractérisé en ce que,** sur le corps de support (8), sont prévus un premier point de fixation (30) pour la fixation d'un premier accessoire (1) et un deuxième point de fixation (31) pour la fixation d'un deuxième accessoire (7).

8. Dispositif selon l'une des revendications 1 à 7,
**caractérisé en ce que,** sur le corps de support (8), est formée une pièce de renforcement (32), qui s'engage dans un évidement du premier accessoire (1) pour renforcer celui-ci.

9. Dispositif selon l'une des revendications 1 à 8,
**caractérisé en ce que,** sur chacune des sections d'extrémité du support de montage (2), opposées l'une à l'autre, une unité de fixation (3) peut être montée sur celui-ci.

10. Dispositif selon l'une des revendications 1 à 9,
**caractérisé en ce que** le premier accessoire (1) est formé par un revêtement de parechoc et le deuxième accessoire (7) est formé par un réceptacle de boîtier de phare.
